Europäisches Patentamt

European Patent Office

Office européen des brevets

(11) Publication number: **0 234 700 B1**

(12) **EUROPEAN PATENT SPECIFICATION**

(45) Date of publication of patent specification: **06.11.91**  (51) Int. Cl.⁵: **G06F 9/46**, G06F 3/02

(21) Application number: **87300337.0**

(22) Date of filing: **15.01.87**

(54) **Control system for a computer system including virtual terminals.**

(30) Priority: **17.01.86 US 820469**

(43) Date of publication of application:
**02.09.87 Bulletin 87/36**

(45) Publication of the grant of the patent:
**06.11.91 Bulletin 91/45**

(84) Designated Contracting States:
**DE FR GB IT**

(56) References cited:
**EP-A- 0 114 357**

**IBM TECHNICAL DISCLOSURE BULLETIN, vol. 20, no. 4, September 1977, pages 1288-1289, New York, US; C.J. PROKOP: "Validity mask processing of keystrokes"**

**IBM TECHNICAL DISCLOSURE BULLETIN, vol. 20, no. 4, September 1977, pages 1290-1291, New York, US; C.J. PROKOP: "Alternative keystroke functions using option director mask"**

**PROCEEDINGS OF THE 7TH SYMPOSIUM ON OPERATING SYSTEM PRINCIPLES, 1979, pages 86,97, ACM, New York, US; K.A. LANTZ et al.: "Virtual terminal management in a multiple process environment"**

(73) Proprietor: **International Business Machines Corporation**
**Old Orchard Road**
**Armonk, N.Y. 10504(US)**

(72) Inventor: **Flurry, Gregory Alan**
**9821 Mandeville Circle**
**Austin Texas 78750(US)**
Inventor: **Wagner, Leslie Anne**
**11913 Snow Goose Road**
**Austin Texas 78758(US)**

(74) Representative: **Atchley, Martin John Waldegrave**
**IBM United Kingdom Limited Intellectual Property Department Hursley Park**
**Winchester Hampshire SO21 2JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to controlling the operation of a computer system of the type having an input device and a plurality of output devices.

For purposes of explanation, the environment of this invention is a device controlled, standalone or host connected computer workstation or system. Included in the computer system will be an operating system program. The device for controlling the computer system can be a standard keyboard having alpha/numeric and cursor motion keys. Also included in the computer system is a cathode ray tube display device. The display device is used for displaying information loaded into the computer system, provided by the operating system, and/or input from the keyboard. A device having the capability of handling information to be operated upon, processed, used, etc., will be referred to as a virtual terminal. The computer system described above is capable of creating a plurality of virtual terminals. When a virtual terminal is created, it is capable of running an application program or other program. When the information handled by a control terminal is displayed, the virtual terminal becomes a real terminal. As such, each real and virtual terminal is made up of the operating system and any application program or other program being used at the time. When a plurality of virtual terminals are included in the computer system, each will include the operating system program and any application program or other program being used thereby.

While the computer system contemplated herein will be capable of handling a plurality of virtual terminals, there will generally only be one display device. In addition, the computer system will generally have only one keyboard, but may have a plurality of other control devices such as light pens, mice, joy sticks, etc.

When an application program or other program has been loaded into the computer system from a diskette, or by calling it up from a memory device, and is running in terms of processing information or awaiting input, a terminal with which the application program is being used will be referred to as active. When the terminal is active, it is interactive with the keyboard.

A traditional approach to handling a number of different application programs in a computer system is to load or call each application program as needed sequentially. This approach has been fraught with problems, primarily because needs change frequently even for a single job. Consider simple document preparation. If a text processing application program has been loaded for preparing one portion of the document and the need for table creation arises, a spreadsheet application must be loaded. If memory capacity is sufficient, all application programs needed can be loaded at the beginning of the operation, but each program must still be called sequentially.

A purported solution to sequential application program calling or loading tasks is the use of a so-called integrated application program. To form such an application program, all text processing and spreadsheet application programs needed are combined on the same diskette. Time is saved in terms of diskette loading and unloading, but again, each application program must still be called sequentially.

Another purported solution is to use an integrated data stream wherein a common data stream is used for handling text, graphics, tables, etc. Tremendous flexibility and capability are provided with an integrated data stream for sequential or serial type work wherein text is prepared, then a spreadsheet is prepared, then text, and so on. However, each type of job must be specified when needed. For parallel type work though, integrated data streams used with single keyboard and display workstations provide little or no added value. No capability is provided in these data streams for processing text and spreadsheets at the same time. Even if another terminal is added, the integrated data stream itself still does not aid in parallel type work or processing. There is still only one keyboard and it is dedicated to the job at hand. Addition of a keyboard increases workstation costs, and working with two keyboards is cumbersome.

A further purported solution lies in the use of a windowing system. Capabilities exist today to window a plurality of application programs at the same time and on the same display screen. Again though, a single keyboard is used and is dedicated to a single window at any given time. In terms of parallel processing, the capabilities of these windowing systems extend no further than those of traditional split screen application programs or facilities where, for example, one portion of a document is displayed on the top half of the screen and another portion is displayed on the bottom half. The keyboard is still dedicated to only one portion at a time.

A point to note is that the term parallel processing as used herein is meant to include the parallel running of different application programs as opposed to concurrent processing of different portions of the same application programs.

Also in the prior art is a concept commonly referred to as background processing or background task. An example of background processing is the processing of information for printing while a user is interactively preparing a document in a foreground mode. Here again, the keyboard is dedicated to only one task at a time.

Based on the above, separate handling of a plurality of application programs with a single keyboard and display is known. Also known is the concept of the creation of and use of a plurality of virtual terminals. Further, keyboard partitioning as a broad concept is known.

The article by K A Lantz et al entitled "Virtual Terminal Management in a Multiple Process Environment" on pages 86-97 of "The Proceedings of The 7th Symposium on Operating System Principles", 1979, ACM, New York, US describes the general properties of virtual terminals.

IBM Technical Disclosure Bulletin, Vol 20, No 4, September 1977, pages 1290-1291 describes the use of option director masks for a keyboard input, processor-based machine to eliminate redundant and multiple overlays of a random-access memory keyboard distributor in order to change the function defined for a particular keystroke.

The object of the present invention is to provide an improved control system and method for controlling the operation of a computer system of the type which includes an input device and a plurality of output devices.

The present invention relates to a control system for controlling the operation of a computer system including an input device and a plurality of virtual terminals created by the computer system. The control system comprises means for causing the input device to be selectively interactive with the plurality of virtual terminals.

According to the invention the control system is characterised in that the control system comprises partitioning means for partitioning the set of signals which may be generated by the input device into a plurality of parts, and dedicating means for selectively dedicating each of the parts to a respective one of the virtual terminals.

The invention also relates to a method of controlling the operation of a computer system including an input device and a plurality of virtual terminals created by the computer system. The method comprises causing the input-device to be selectively interactive with the plurality of virtual terminals.

According to the invention the method is characterised by partitioning the set of signals which may be generated by the input device into a plurality of parts, and selectively dedicating each of the parts to a respective one of the virtual terminals.

One advantage of the advance is that the computer system can use a plurality of application programs and can receive input signals at the same time. There is no need to exit from one application program before entering another.

In order that the invention may be more readily understood, an embodiment will now be described with reference to the accompanying drawings, in which

Fig. 1 illustrates in block diagram form part of a computer system including a keyboard and displays structured according to the invention, and

Fig. 2 illustrates in greater detail the relationship of a screen manager and device driver utilised in the computer system of Fig. 1 to the remainder of the system.

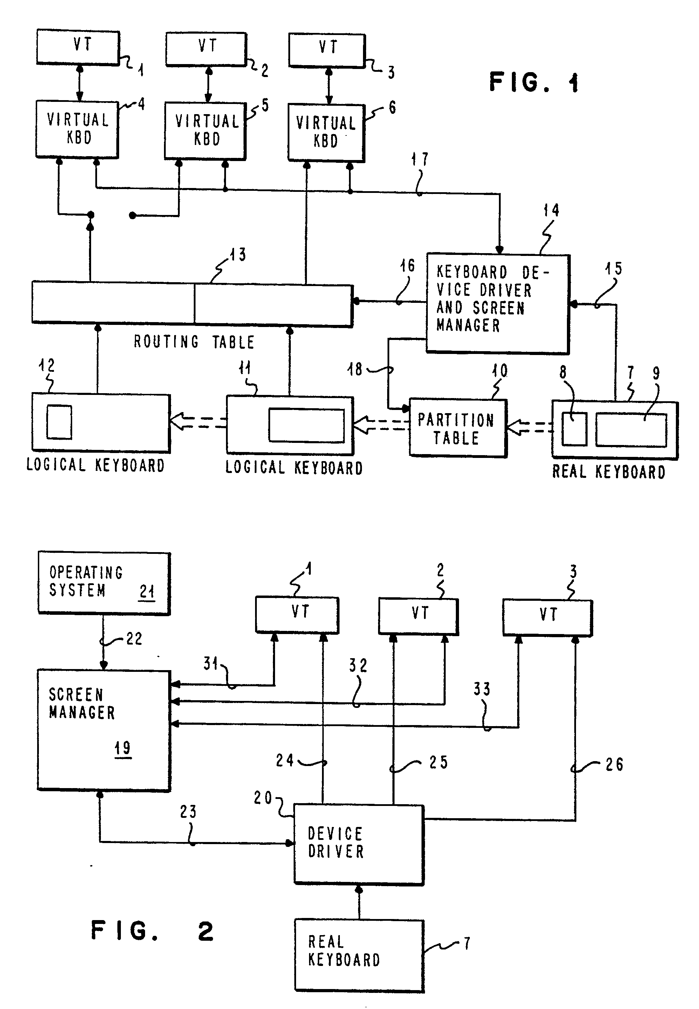

For a more detailed understanding of the invention, reference is first made to Fig. 1. In a device controlled standalone or host connected computer work station or system, a plurality of virtual terminals 1, 2 and 3 (as defined above) can be created, and any one of the terminals can be real (as defined above) at any one time. It is to be assumed that virtual terminals 1, 2 and 3 are active and running application programs. One of these may be a text processing application program, one may be a draw graphics application program, etc. When one of the virtual terminals becomes real, information will be displayed on the face of a display device (not illustrated) included in the computer system. When the virtual terminals are all virtual, information processing can take place, but there will be no visual display of information.

Associated with each of the virtual terminals 1, 2 and 3 are virtual keyboards 4, 5 and 6. Virtual keyboards 4, 5 and 6 can effectively become real upon the partitioning of a real keyboard 7 which is the computer system input device. Any other input device capable of being partitioned could alternatively be utilised. Keyboard 7 has a cursor motion key pad portion 8 and an alpha/numeric key pad portion 9. Following the partitioning of keyboard 7, keystroke signals corresponding to a user using the keys of the keyboard are routed to a partition table 10. In actuality, partitioning of keyboard 7 is by a user, an application program or the computer system partitioning table 10.

The output of table 10 is supplied to logical keyboards 11 and 12. The outputs from logical keyboards 11 and 12 are routed to a routing table 13. Table 13 is for routing signals from logical keyboards 11 and 12 to selected ones of virtual keyboards 4, 5 and 6 and virtual terminals 1, 2 and 3. For example, it may be determined that the signals from logical keyboard 11 are to be routed to terminal 3 and the signals from logical keyboard 12 are to be routed to terminal 1 as shown.

Inputs to table 13 for determining the routing of signals can be either from keyboard 7 along line 15, through a keyboard device driver and screen manager 14, and along line 16, or along lines 17 from the application programs being run on virtual terminals 1, 2 and 3. In like manner, inputs to table 10 for keyboard partitioning purposes can be either from keyboard 7, or from the application programs being run on terminals 1, 2 and 3 via keyboard device driver and screen manager 14 and line 18. In addition, there can be a change in keyboard partitioning and signal routing depending on the state of a particular application program or terminal, etc. For example, there may be a change in real terminals with differing key requirements.

In addition, logical partitioning of a real keyboard is not limited to physical groupings such as cursor motion and alpha/numeric key pads. The partitioning may be based on shift states, etc.

Reference is next made to Fig. 2 which illustrates in greater detail the relationship of keyboard device driver and screen manager block 14 in Fig. 1 to virtual terminals 1, 2 and 3. All the virtual terminals must act in the same manner relative to device driver 20, and may thus be considered a single component with multiple instances.

There are two important facets of the virtual terminal subsystem of Fig. 2. The first is the routing of input event signals to virtual terminals. The second is the changing of the routing to make another virtual terminal active.

The real input device keyboard 7 may be partitioned by several means. For example, the virtual terminal subsystem may permanently partition the keyboard, or an operating system 21 can partition the keyboard by communicating with a screen manager 19 along line 22. Screen manager 19 in turn communicates the partitioning to device driver 20 along line 23. Screen manager 19 and device driver 20 together form the keyboard device driver and screen manager 14 of Fig. 1. Each partition instruction is assigned a number to be used as an index into routing table 13 shown in Fig. 1.

Device driver 20 routes input event signals to virtual terminals 1, 2 and 3 along lines or paths 24, 25 and 26. Device driver 20 uses routing table 13 to determine the virtual terminal that will receive each input event signal. Routing table 13 contains an entry for each logical part of real input device keyboard 7. The entry contains an identifier for the path from device driver 20 to the virtual terminal that should receive events from logical devices 1 and 3 in Fig. 1. The identifier is for paths 24, 25 and 26.

The following sequence of steps illustrate the input event signal routing for causing a single keyboard to be interactive with a plurality of active virtual terminals.

1. A normal input event signal in its flow through the system from real device 7 is received by device driver 20.

2. The device driver 20 determines the logical part to which the input event belongs using a method appropriate to a partitioning strategy. This results in the generation of a partition number.

3. The device driver 20 derives the path along which to send the input event signal by using the partition number as an index into the routing table 13.

4. The device driver then sends the input event along the path derived from the routing table, and then to the correct virtual terminal.

In the above arrangement there is selected a single path between the device driver 20 and one of virtual terminals 1, 2 and 3 for all logical devices required by the virtual terminal. This permits the device driver to route different logical devices to different virtual terminals, in order for a plurality of virtual terminals to receive input event signals.

For a change in routing, a virtual terminal may specify which part of a physical device it desires to use. This can be accomplished in several ways. One is default assignment. Here, one logical device is always assigned to a particular virtual terminal while other parts are always assigned to the active virtual terminal. Other ways include default assignment by class of virtual terminal, and providing an interface, using paths 31, 32 and 33 in Fig. 2. Using an interface allows a virtual terminal to specify exactly which logical devices it requires. The screen manager 19 must record the virtual terminal needs and communicate that information to the device driver 20 along path 23 at the time a virtual terminal is to be made active.

A variety of methods exist for deciding which virtual terminal receives an input signal from a part of a logical device. For example, the simplest method is to determine that the last virtual terminal requesting a logical device when active will continue to receive an input signal from that logical device until another virtual terminal requesting that logical device becomes active. A more sophisticated method is to allow the operating system along path 22 or a virtual terminal along paths 31, 32, and 33 to assign a priority according to the virtual terminals needs. The logical device is always assigned to the virtual terminal that has the highest priority assigned to the device. A variation is to route event signals from the logical device to the active virtual terminal and to the virtual terminal with the highest priority if the active one has not requested the device.

The request precipitating the change in input signal routing may come from the partitioned input device

4

driver 20 along path 23, or from the operating system 21, along path 22. In any event, the result is the same.

This operation is illustrated by the following sequence of steps.

1. Screen manager 19 receives a change request and determines the virtual terminal that is to become active, based on subsystem rules for screen management and the form of the request.

2. Screen manager 19 next determines the new routing for all parts of all partitioned input devices based on the virtual terminal that is to become active. There may be more than one partitioned device in the subsystem and all must switch when another virtual terminal becomes active.

3. Screen manager 19 then sends the new routing information to device driver 20.

4. Device driver 20 ensures that the logical device is synchronised for the virtual terminal becoming inactive. This requires that device driver 20 maintain state information for a logical device that may have modes such as "shift".

5. Device driver 20 then changes its routing table to reflect the new routing determined by screen manager 19.

6. Device driver 20 next ensures that the logical device is synchronised for the virtual terminal becoming active.

7. Thereafter, device driver 20 acknowledges the screen manager command via path 23.

8. Screen manager 19 then sends a deactivate command to the virtual terminal becoming inactive.

9. The virtual terminal itself initiates any activities needed to become inactive.

10. The virtual terminal then acknowledges the screen manager command via one of paths 31, 32 and 33.

11. Next, screen manager 19 sends an activate command to the virtual terminal becoming active.

12. The virtual terminal becoming active initiates any activities needed to become active.

13. The virtual terminal then acknowledges the screen manager command via one of paths 31, 32 and 33, as indicated by block 46.

Set out below are illustrations of routines for partitioning and routing, and causing a single input device to be interactive with a plurality of active virtual terminals. These routines are in program design language from which source and object code are derivable.

```
              ON RECEIPT OF AN INPUT EVENT SIGNAL (E)


         -    CALL GET_PARTITION (E, P)

              CALL GET_ROUTE (R)

              CALL SEND_EVENT (R, E)
```

The preferred mode for routine GET__PARTITION to determine the correct partition operation is to use information from the event (E) itself as an index into a partition table that lists the correct partition operation for each possible event. For a keyboard, the information could be a scan code. Each partition operation is assigned a number to be used as an index into the routing table as described below. The number of the partition operation is returned in P.

The routine GET__ROUTE derives the path, or route, on which to send the input event to a virtual terminal by using the partition number as an index into the routing table. Device driver 20 routes input events to virtual terminals 1, 2, and 3 along paths 24, 25, and 26. Device driver 20 uses a routing table to determine the virtual terminals that receive each input event signal. The routing table contains an entry for each logical partition of real input device 7. The entry contains an identifier for the path from device driver 20 to the virtual terminal that is to receive events from that logical device. The route identifier is then returned in R.

The SEND__EVENT routine sends the input event (E) to the correct virtual terminal along the path identified by R.

The following routines are for changing the input signal routing. These routines are also in program design language from which source and object code are derivable.

ON REQUEST TO CHANGE THE INPUT SIGNAL ROUTING

```
CALL FIND_VT (VT)

FOR ALL PARTITIONED DEVICES

    FOR ALL PARTITIONS OF THE REAL DEVICE

        CALL FIND_ROUTE (VT, P, PD, R)

        PUT R IN NEW ROUTING TABLE (NRT)

    ENDFOR

    CALL NEW_ROUTES (PD, NRT)

    CALL SYNC_VTS (PD, OVT, VT)

ENDFOR

CALL DEACTIVATE_VT (OVT)

CALL ACTIVATE_VT (VT)
```

The routine FIND__VT determines the virtual terminal (VT) that is to become active, based on the subsystem rules for screen management and the form of the request.

The routine FIND__ROUTE determines the new routing (R) for a part (P) of a partitioned input device (PD) based on the virtual terminal that is to become active. A variety of methods exist for deciding which virtual terminal receives input signals from a part of a logical device. For example, a simple method is to have the last virtual terminal that requested the logical device when it was active to continue to receive input signals from the logical device until another virtual terminal requesting that logical device becomes active. A more sophisticated method is for the operating system or a virtual terminal to assign a priority according to the virtual terminal's needs. The logical device will always be assigned to the virtual terminal that has the highest priority assigned to the device. A variation of this method is to route event signals from the logical device to the active virtual terminal and to the virtual terminal with the highest priority if the active one has not requested the device.

The routine NEW__ROUTES sets the new routing (NRT) for the partitioned device (PD). This allows input event signals from the device to be routed to the proper virtual terminals for the new state of activity.

The routine SYNC__VT ensures that the logical devices (PD) are synchronised for the virtual terminal (OVT) becoming inactive and the virtual terminal (VT) becoming active. This requires that the device driver keep state information for a logical device that may have modes such as "shift".

The routines ACTIVATE__VT and DEACTIVATE__VT allow the virtual terminals becoming active (VT) and inactive (OVT) to perform any functions required.

In summary, there is described above a system and method for controlling the operation of a computer system so as to extend the applicability of a single input device to a plurality of active virtual terminals at the same time. This is accomplished by partitioning the input device, and dedicating one part thereof to one virtual terminal and another part thereof to another virtual terminal. An example of partitioning when the input device is a keyboard is to dedicate the cursor motion key pad portion of the keyboard to one virtual terminal and the alpha/numeric key pad portion to another virtual terminal.

## Claims

1. A control system for controlling the operation of a computer system including an input device (7) and a plurality of virtual terminals (1, 2, 3) created by said computer system comprising means for causing said input device to be selectively interactive with said plurality of virtual terminals,

   characterised in that

   said control system comprises partitioning means (10) for partitioning the set of signals which may be generated by said input device into a plurality of parts (11, 12), and dedicating means (13, 14) for selectively dedicating each of said parts to a respective one of said virtual terminals.

2. A control system as claimed in Claim 1 characterised in that it includes means for running an application program on at least one of said virtual terminals.

3. A control system as claimed in either of the preceding claims characterised in that said input device is a keyboard (7) having a plurality of sets of keys (8, 9).

4. A control system as claimed in Claim 3 characterised in that said partitioning means includes mens for partitioning said keyboard into said sets of keys (11, 12) and said dedicating means comprises means for dedicating one set of keys to one of said virtual terminals and another set of keys to another of said virtual terminals.

5. A method of controlling the operation of a computer system including an input device (7) and a plurality of virtual terminals (1, 2, 3) created by said computer system comprising causing said input device to be selectively interactive with said plurality of virtual terminals,

   characterised by

   partitioning the set of signals which may be generated by said input device into a plurality of parts (11, 12), and selectively dedicating each of said parts to a respective one of said virtual terminals.

6. A method a claimed in Claim 5 characterised by running an application program on at least one of said virtual terminals.

7. A method as claimed in Claim 5 or Claim 6 in which said input device is a keyboard having a plurality of sets of keys characterised by partitioning said keyboard into said sets of keys and dedicating one set of keys to one of said virtual terminals and another set of keys to another of said virtual terminals.

**Revendications**

1. Système de commande pour commander le fonctionnement d'un système d'ordinateur comprenant un dispositif d'entrée (7) et une pluralité de terminaux virtuels (1,2,3) créés par ledit système d'ordinateur et comprenant des moyens pour amener ledit dispositif d'entrée à établir, de façon sélective, une liaison interactive avec ladite pluralité de terminaux virtuels,
   caractérisé en ce que
   ledit système de commande comprend des moyens de subdivision (10) servant à subdiviser l'ensemble de signaux qui peuvent être produits par ledit dispositif d'entrée en une pluralité d'éléments (11,12), et des moyens d'affectation (13,14) servant à affecter de façon sélective chacun desdits éléments à l'un respectif desdits terminaux virtuels.

2. Système de commande selon la revendication 1, caractérisé en ce qu il comprend des moyens pour exécuter un programme d'application dans au moins l'un desdits terminaux virtuels.

3. Système de commande selon l'une quelconque des revendications précédentes, caractérisé en ce que ledit dispositif d'entrée est un clavier (7) possédant une pluralité d'ensembles de touches (8,9).

4. Système de commande selon la revendication 3, caractérisé en ce que lesdits moyens de subdivision comprennent des moyens pour subdiviser ledit clavier en lesdits ensembles de touches (11,12), et lesdits moyens d'affectation comprennent des moyens pour affecter un ensemble de touches à l'un desdits terminaux virtuels et un autre ensemble de touches à l'autre desdits terminaux virtuels.

5. Procédé pour commander le fonctionnement d'un système d'ordinateur comprenant un dispositif d'entrée (7) et une pluralité de terminaux virtuels (1,2,3) créés par ledit système d'ordinateur et consistant à amener ledit dispositif d'entrée à établir, de façon sélective, une liaison interactive avec ladite pluralité de terminaux virtuels,
   caractérisé par
   la subdivision de l'ensemble de signaux, qui peuvent être produits par ledit dispositif d'entrée, en une pluralité d'éléments (11,12), et l'affectation sélective de chacun desdits éléments à l'un respectif desdits terminaux virtuels.

7

6. Procédé selon la revendication 5, caractérisé par l'exécution d'un programme d'application dans au moins l'un desdits terminaux virtuels.

7. Procédé selon la revendication 5 ou 6, selon lequel ledit dispositif d'entrée d'un clavier possédant une pluralité d'ensembles de touches, caractérisé par la subdivision dudit clavier en lesdits ensembles de touches et l'affectation d'un ensemble de touches à l'un desdits terminaux virtuels et de l'autre ensemble de touches à l'autre desdits terminaux virtuels.

**Patentansprüche**

1. Steuersystem zum Steuern des Betriebes eines Rechnersystems mit einer Eingabeeinrichtung (7) und einer Mehrzahl virtueller Terminals (1, 2, 3), die durch das Rechnersystem erzeugt wird, das Mittel aufweist, um zu bewirken, daß die Eingabeeinrichtung mit der Mehrzahl virtueller Terminals selektiv interaktiv ist,

dadurch gekennzeichnet, daß

das Steuersystem aufweist: ein Unterteilungsmittel (10), um die Gruppe von Signalen, die durch die Eingabeeinrichtung erzeugt werden können, in eine Mehrzahl von Teilen (11, 12) zu unterteilen und ein Zuordnermittel (13, 14), um jeden der Teile einem entsprechenden der virtuellen Terminals selektiv zuzuordnen.

2. Steuersystem nach Anspruch 1, dadurch gekennzeichnet, daß dieses Mittel aufweist, um ein Anwendungsprogramm auf zumindest einem der virtuellen Terminals laufen zu lassen.

3. Steuersystem nach irgend einem der vorgehenden Ansprüche, dadurch gekennzeichnet, daß die Eingabeeinrichtung eine Tastatur (7) mit einer Mehrzahl von Gruppen von Tasten (8, 9) ist.

4. Steuersystem nach Anspruch 3, dadurch gekennzeichnet, daß das Unterteilungsmittel Mittel zum Unterteilen der Tastatur in die Gruppen von Tasten (11, 12) aufweist und das Zuordnermittel Mittel zum Zuordnen einer Gruppe von Tasten einem der virtuellen Terminals und einer anderen Gruppe von Tasten einem anderen der virtuellen Terminals aufweist.

5. Verfahren zum Steuern des Betriebs eines Rechnersystems mit einer Eingabeeinrichtung (7) und einer Mehrzahl virtueller Terminals (1, 2, 3), die durch das Rechnersystem erzeugt wird, welches bewirkt, daß die Eingabeeinrichtung mit der Mehrzahl virtueller Terminals selektiv interaktiv ist,

gekennzeichnet durch

Unterteilen der Gruppe von Signalen, die durch die Eingabeeinrichtung erzeugt werden können, in eine Mehrzahl von Teilen (11, 12) und selektives Zuordnen jeden der Teile einem entsprechenden der virtuellen Terminals.

6. Verfahren nach Anspruch 5, gekennzeichnet durch das Laufen-Lassen eines Anwendungsprogrammes auf zumindest einem der virtuellen Terminals.

7. Verfahren nach Anspruch 5 oder Anspruch 6, bei welchem die Eingabeeinrichtung eine Tastatur (7) mit einer Mehrzahl von Gruppen von Tasten (8, 9) ist, gekennzeichnet durch Unterteilen der Tastatur in die Gruppen von Tasten (11, 12) und Zuordnen einer Gruppe von Tasten einem der virtuellen Terminals und einer anderen Gruppe von Tasten einem anderen der virtuellen Terminals.

FIG. 1

FIG. 2